# EUROPÄISCHE PATENTSCHRIFT

(11) **EP 1 359 996 B1**
(45) Veröffentlichungstag und Bekanntmachung des Hinweises auf die Patenterteilung: **11.08.2004**
(21) Anmeldenummer: 02719847.2
(22) Anmeldetag: 15.02.2002
(51) Int. Cl.: B01D 71/02, B01D 69/12, B01J 20/18, B01J 37/02

(54) **FILTERKÖRPER**
FILTER BODY
CORPS FILTRANT

(30) Priorität: 17.02.2001 DE 10107539
(43) Veröffentlichungstag der Anmeldung: 12.11.2003
(73) Patentinhaber: Aaflowsystems GmbH & Co. KG, 73457 Essingen (DE)
(72) Erfinder: BENFER, Sigrid, 09599 Freiberg (DE); BLÄSE, Dieter, 73557 Mutlangen (DE); FEUERPEIL, Hans-Peter, 73529 Schwäbisch Gmünd (DE); HOFFMANN, Jenny, 09661 Riechberg (DE); OLAPINSKI, Hans, 73773 Aichwald (DE); SELING, Barbara, 73479 Ellwangen (DE); TOMANDL, Gerhard, 09599 Freiberg (DE)
(74) Vertreter: Dr. Weitzel & Partner
(86) Internationale Anmeldenummer: PCT/EP2002/001624
(87) Internationale Veröffentlichungsnummer: WO 2002/066141

(56) Entgegenhaltungen:
- EP-A- 0 674 939
- EP-A- 0 976 440
- FR-A- 2 786 710
- US-A- 5 258 339
- US-A- 6 074 457
- US-A- 6 140 263

## Beschreibung

Die Erfindung betrifft eine Membran zum Filtrieren von Flüssigkeiten und ein Verfahren zur Herstellung der Membran. Eine solche Vorrichtung ist beispielsweise in DE 100 19 672 A1 beschrieben. Es geht dabei allgemein um Filterelemente für die Querstromfiltration mit einer Zeolith-Schicht als Trennschicht.

Filterelemente können Flachelemente, röhrenförmige Elemente (Monokanal, Multikanal), es können aber auch scheibenförmige Filterelemente (Rotorfilter) sein; das Material, welches den die Trennschicht tragenden Stützkörper bildet kann aus porösen, keramischen Werkstoffen, oder aus porösen Metallen bestehen.

Bei Filterkörpem jeglicher Art geht es stets um zwei Forderungen: Zum einen soll der Durchsatz, das heißt die Menge des durch das Filtermedium durchgesetzten Volumens, so groß wie möglich sein. Zum anderen soll aber die Trennleistung oder Trennschärfe optimal sein, das heißt, es sollen Partikel beziehungsweise Moleküle einer bestimmten Größe von einem Fluid beziehungsweise größere Moleküle von kleineren Molekülen (fest-flüssig-gas-Separation) abgetrennt werden.

Diese beiden Forderungen sind an sich widersprüchlich. Je größer der Durchsatz ist, desto schlechter ist in der Tendenz die Trennleistung. Dieses Gesetz gilt insbesondere dann, wenn die abzutrennenden Partikel beziehungsweise Moleküle klein sind. Dabei wird unter "klein" verstanden, daß sich die Partikelgröße/Molekülgröße im Nanobereich bewegt.

Filterkörper der hier in Rede stehenden Art sind in der Regel aus den folgenden Schichten aufgebaut, und zwar in Durchflußrichtung gesehen: An erster Stelle befindet sich eine Membranschicht. Diese führt die eigentliche Trennfunktion aus. Sie ist dominierend für das Filtrationsergebnis. Sie ist im allgemeinen von relativ geringer Dicke.

Hierauf folgt wenigstens eine weitere Schicht, die die Membranschicht trägt und demgemäß als "Stützschicht" bezeichnet wird. Die Stützschicht hat im wesentlichen keine Filtrationsfunktion. Sie kann wesentlich dicker sein, als die Membranschicht.

Die Stützschicht wird ihrerseits vom Stützkörper, welcher die geometrische Struktur (Flachmembran/Röhrenmembran/Scheibenmembran) vorgibt, getragen.

Als Material der Membranschicht kommt Zeolith in Betracht, und zwar in zahlreichen Abwandlungen. Zeolithe umfassen in jedem Fall Aluminium und Siliziumoxide. Sie sind aus der Literatur bekannt zum Erfüllen von extremen Trennfunktionen, bei denen besonders kleine Partikel beziehungsweise Moleküle aus einer Suspension beziehungsweise Lösung abgetrennt werden sollen. Siehe JP 09131516-A. Dort wird beschrieben, auf welche Weise Wasser von einem Gemisch abgetrennt werden kann das Wasser sowie organische oder anorganische Bestandteile aufweist. Die hierbei verwendeten Trennmembrane sind aus Zeolith aufgebaut. Sie bestehen aus dünnen Filmen.

Die Herstellung der Zeolith-Membran erfolgt beispielsweise folgendermaßen: Auf die Stützschicht wird eine wässrige Suspension aus Aluminiumsilikat aufgebracht, hergestellt aus koloidalem Siliziumoxid, Natriumaluminat, Natriumhydroxid und Wasser. Die dabei gebildete aufgebrachte Schicht auf der Stützschicht wird sodann einer hydrothermalen Behandlung unterworfen, wobei Zeolith-Kristalle zu wachsen beginnen. Herbei werden jedoch nur die Poren der Stützschicht mit Zeolith-Kriställchen aufgefüllt und teilweise verschlossen. Ein solcher Schichtaufbau führt zu geringen Durchsatzleistungen, da die Poren der darunter liegenden Stützschicht in Längsrichtung einige µm mit Zeolith aufgefüllt werden und nur ca. 1/3 der geometrischen Membranfläche als Durchgangsfläche zur Verfügung steht. Eine gegebenenfalls extrem dünne Zeolith-Schicht darüber verbesert die geringe Durchsatzleistung nicht. Eine andere Herstellmethode für eine Zeolith-Schicht (Membran) besteht darin, daß man die Oberfläche einer Stütz-Schicht (Stütz-Membran) aus anorganischen gegebenenfalls keramischen Material mit einer Zeolith bildenden Lösung beziehungsweise Suspension kontraktiert und unter hydrothermalen Bedingungen Zeolith-Kriställchen entstehen läßt. Auch hier bildet sich eine Zeolith-Membran, wobei zunächst zwischen den Zeolith-Kriställchen Lücken vorhanden sind, welche zu einer schlechten Trennschärfe führen. Läßt man jedoch die Zeolith-Kriställchen ausreichend lange wachsen, (Wachstum erfolgt in allen Kristallrichtungen gleichzeitig) so werden diese Lücken geschlossen und man erhält eine Membranschicht mit einer ausgezeichneten Selektivität. Nur noch die Zeolith-Kristallstruktur ist jetzt für die Trennwirkung verantwortlich, nicht mehr die Lücken zwischen den Zeolith-Kriställchen. Der Nachteil der auf diesem Weg hergestellten Zeolith-Membran, ist die geringe Durchsatzleistung aufgrund der hohen Schichtdicke.

In der Literatur wird von Versuchen berichtet, eine Zeolith-Membran zu realisieren, die möglichst dünn und gleichzeitig frei von Lücken zwischen den Zeolith-Kriställchen sind; dies geschicht durch gezielte Beeinflussung des Kristallisationsprozesses, wobei angestrebt wird, anstelle von wenigen großen Einzelkriställchen eine Vielzahl sehr viel kleinerer Kriställchen zu züchten; die Ergebnisse dieser Versuche haben aber bisher noch nicht zu befriedigenden Durchsatzergebnissen geführt.

US-A-6 140 263 beschreibt ein Verfahren mit den Verfahrenschritten; a) Bereitstellen einer porösen funktionsschicht aus z.B. Zeolith, b) Aufbringen einer flüssigkeit, die Zeolith-Precursoren enthalt auf die Schicht und c) Bildung einer kontinuierlichen Molekularsiebschritt durch eine Temperatur/Druckbehandlung.

US-A-5 258 339 beschreibt ein ähnliches Verfahren.

DE 696 08 128 T2 beschreibt ein Filterelement, das eine Molekularsiebschicht umfaßt. Darin ist auch das Problem angesprochen, das solchen Membranfilterkörpem eigen ist - siehe dort den überbrückenden Absatz der Seiten 3 und 4. Demgemäß ist es schwierig, die Zeolithschicht eines solchen Membranfilterkörpers derart herzustellen, dass sie völlig geschlossen ist und auch geschlossen bleibt.

Auf Seite 4 des genannten Dokumentes, Zeilen 12 bis 22, ist der Stand der Technik mit seinen Nachteilen abgehandelt. Demgemäß kann man zwar eine geschlossene Zeolithschicht erzielen, wenn diese eine große Stärke aufweist. Stattdessen kann man auch auf eine erste Zeolithschicht eine zweite Zeolithschicht auflegen, in der Erwartung, dass Hohlräume in den beiden Schichten an unterschiedlichen Stellen auftreten. Beide Lösungen haben den Nachteil eines hohen Stofftransportwiderstandes und damit eines geringen Durchsatzes.

Das genannte Dokument selbst empfiehlt, zusätzlich zur Zeolithschicht eine weitere Schicht aus hitzebeständigem Material vorzusehen, das einen Schmelzpunkt von mindestens 1800 Grad Celsius hat. Das Material dieser weiteren Schicht ist jedenfalls kein Zeolith, da Zeolith spätestens bei 1000 Grad Celsius zerfällt.

Dabei soll das hitzebeständige Material gewissermaßen als Lückenstopfer dienen. Hieraus ergibt sich, dass die Molekularsiebschicht gemäß jenem Dokument zunächst Lücken aufweist.

Der Erfindung liegt die Aufgabe zugrunde, einen Filterkörper zu schaffen, der eine hohe Trennschärfe aufweist und der insbesondere geeignet ist für die Abtrennung von Partikeln beziehungsweise Molekülen im Nanobereich, der aber gleichzeitig nur eine sehr geringe Dicke und damit einen akzeptablen Durchsatz aufweist.

Diese Aufgabe wird durch die Merkmale von Anspruch 1 gelöst.

Die Erfindung sieht eine poröse Funktionsschicht aus Zeolith-Partikeln vor. Dies ist der Kerngedanke der Erfindung. Hierdurch wird Folgendes erzielt:
Wird gemäß Anspruch 1 ein zur Zeolithbildung geeigneter Precursor auf die Funktionsschicht aus Zeolith-Partikeln aufgebracht, so bildet sich unmittelbar auf der Oberfläche der Zeolith-Partikel eine Vielzahl von Zeolith-Kristallkeimen aus dem Precursor-Material. Diese Zeolith-Kristallkeime beginnen sodann zu wachsen. Das Kristallwachstum erfolgt dabei nach allen Richtungen, somit nicht nur in Richtung auf die entstehende Molekularsiebschicht, sondern auch in den oberen Bereichen der Funktionsschicht an deren Zeolith-Partikeln. Die dort befindlichen Hohlräume werden alsbald geschlossen, so dass eine völlig geschlossene Molekularsiebschicht aus Zeolith-Kristallen entsteht.

Die Molekularsiebschicht besteht aus extrem kleinen Zeolith-Kriställchen, die sowohl in den Porenkanälen der darunterliegenden porösen Zeolith-Schicht, als auch in der darüberliegenden Schicht gewachsen sind; man erhält somit einen kontinuierlichen Übergang von poröser zu dichter Zeolith-Schicht an deren Oberfläche.

Durch den beschriebenen Vorgang - rasches und allseitiges Anwachsen der Zeolith-Kristalle - herrscht auch bei geringer Dicke der Molekularsiebschicht eine hohe Garantie für die Freiheit dieser Schicht von Poren, Öffnungen oder Hohlräumen.

Wie man sieht, ist die erfindungsgemäße Lehre äußerst einfach auszuführen, bei großem technischem Erfolg.

Beispiele für Zeolithe, die sowohl für die Zwischenschicht als auch für die Deckschicht, das heißt diejenige Schicht, auf die die zu behandelnde Flüssigkeit zuerst auftrifft, sind in der nachstehenden Tabelle dargestellt:

| | |
|---|---|
| Cancrinit | Na₆ Al₆ Si₆ O₂₄ CaCO₃ 2H₂ O |
| Chabazit | (Ca, Na₂)~₂Al₄ Si₈ O₂₄13H₂ O |
| Erionit | (Ca, K₂, Na₂)~₄ AJ₈ Si₂₈ O₇₂27H₂ O |
| Faujasit | ∼Na₁₃ Ca₁₁ Mg₉ K₂ Al₅₅ Si₁₃₇ O₃₈₄235H₂O |
| Gmelinit | (Na, etc.)~₈ Al₈ Si₁₆ O₄₈ 24H₂ O |
| Mazzit | K_{2.5} MG_{2.1} Ca_{1.4} Na_{0.3}Al₁₀Si₂₆ O₇₂28H₂ O |
| Mordenit | Na₈ Al₈ Si₄₀ O₉₆24H₂ O |
| Offretit | KcaMgAl₅ Si₁₃ O₃₆15H₂ O |
| Solalit | Na₆ Al₆ Siₛ O₂₄ 2NaCl |

Die Erfindung ist anhand der Zeichnung erläutert.

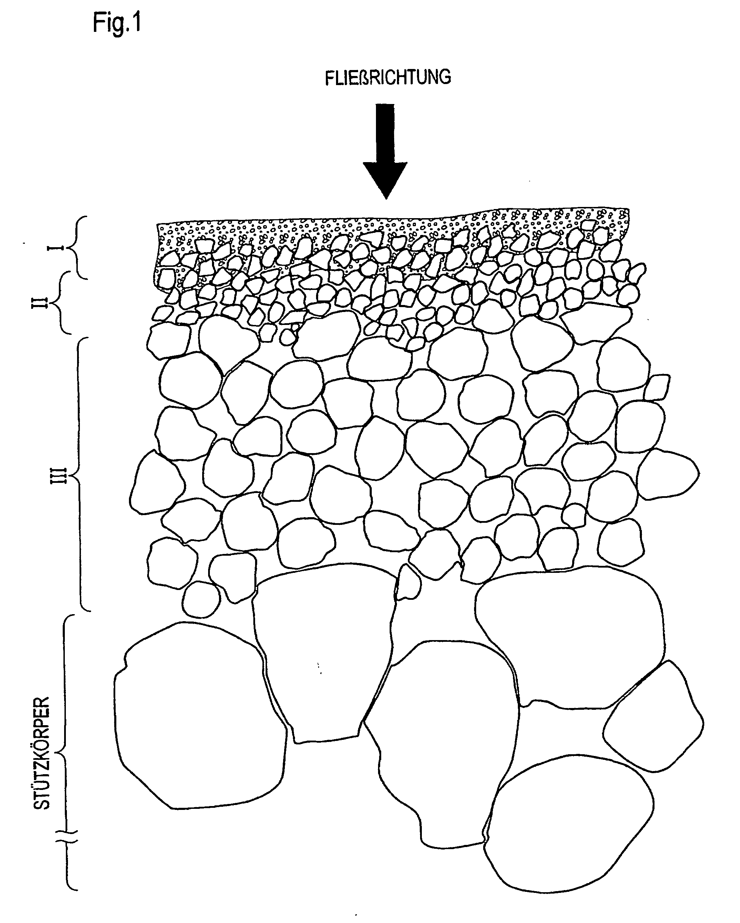

- Figur 1: zeigt einen Filterkörper im Querschnitt.
- Figur 2: zeigt ein Multikanal-Filterelement im Querschnitt.
- Figur 3: zeigt ein Kapillarröhrchen in einem Längsschnitt.

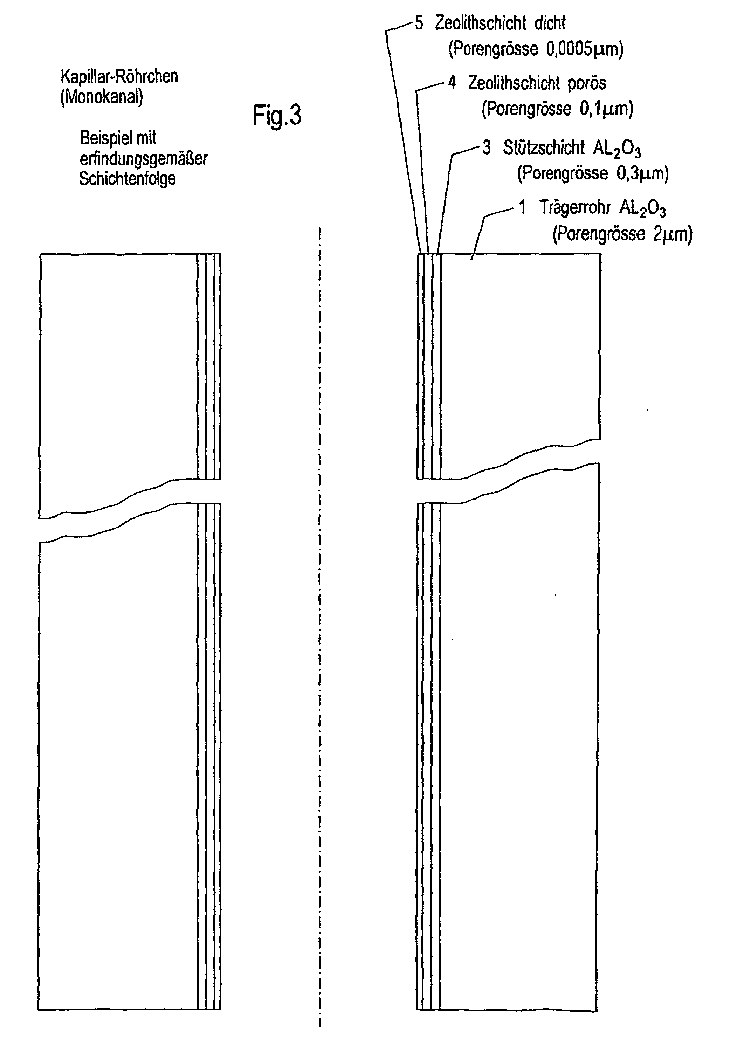

Der in Figur 3 dargestellte Filterkörper ist aus drei Schichten I bis III, sowie dem Stützkörper aufgebaut. Der Pfeil stellt die Strömungsrichtung der zu behandelnden Flüssigkeit dar. Dabei ist die Ausdrucksweise "Flüssigkeit" im weitesten Sinne zu verstehen. Es kann sich somit um ein irgendwie geartetes fließfähiges Medium handeln.

Die drei Schichten umfassen eine Molekularsiebschicht 1, eine Funktionsschicht II und eine oder mehrere Stützschichten III.

Die Stützschicht III ist im vorliegenden Falle in bekannter Weise aus keramischem Material aufgebaut. Sie hat eine relativ grobporöse Struktur mit Porengrößen im Bereich von 1 µm bis 0,01 µm. Sie kann Bestandteile wie Al₂O₃, TiO₂, SiO₂ enthalten.

Sämtliche Schichten sind sind auf einem Stützkörper aufgebaut.

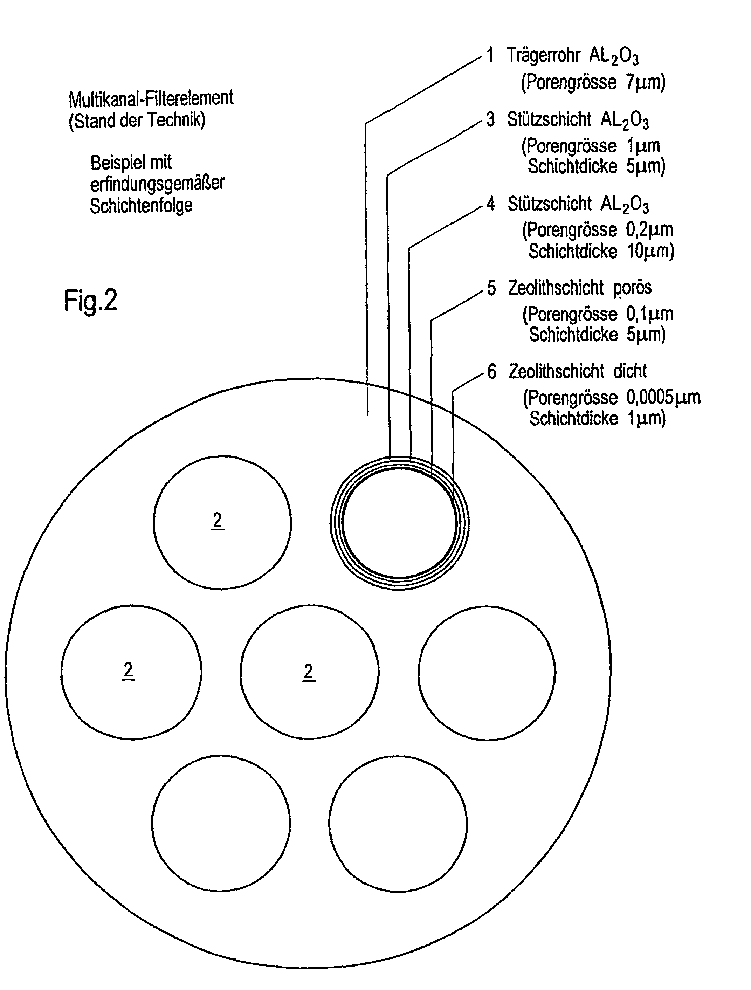

Wie dies in der Praxis aussieht, ist in den Figuren 2 und 3 veranschaulicht.

Das in Figur 2 dargestellte Multikanal-Filterelement umfasst ein stabförmiges Trägerrohr 1. Dieses besteht aus porösem Al₂O₃ mit einer Porengröße von 7 µm. Das Trägerrohr weist eine Mehrzahl von durchgehenden Axialkanälen 2 auf, die parallel zueinander verlaufen.

Auf die Innenfläche eines jeden Kanals sind mehrere Schichten aufgebracht. Von Außen nach Innen sind dies die folgenden Schichten:
eine Stützschicht 3 aus Al₂O₃ mit einer Porengröße von 1 µm und einer Schichtdicke von 30 µm
eine Stützschicht 4 aus Al₂O₃ mit einer Porgengröße von 0,2 µm und einer Schichtdicke von 10 µm
eine poröse Zeolith-Schicht 5 (entspricht Funktionsschicht II) mit einer Porengröße von 0,1 µm und einer Schichtdicke von 5 µm
eine Zeolith-Schicht 6 (entspricht Molekularschicht I) mit einer Porengröße
von 0,0005 µm und einer Schichtdicke von 1 µm.

Zeolith-Schicht 5 ist porös, während Zeolith-Schicht 6 geschlossen ist.

Das in Figur 3 gezeigte Kapillarröhrchen ist ein weiteres Anwendungsbeispiel. Hierbei handelt es sich um ein Trägerrohr 1 aus Al₂O₃ mit einer Porengröße von 2 µm. Es folgen, von außen nach innen gesehen, die folgenden Schichten:
eine Stützschicht 3 aus Al₂O₃ mit einer Porengröße von 0,3 µm
eine Zeolith-Schicht 4 mit einer Porengröße von 0,1 µm
eine Zeolith-Schicht 5 mit einer Porengröße von 0,0005 µm (0,5 nm).

Die Zeolith-Schicht 4 ist porös, während die Zeolith-Schicht 5 geschlossen ist.

Die Figuren 2 und 3 mit zugehörenden Erläuterungen sind nur beispielhaft. Abweichungen der Zahlenangaben sowie der Schichtanordnungen der Stützschichten sind variabel.

Die Funktionsschicht II sowie sämtliche Stützschichten III haben für den eigentlichen Filtrationsprozeß keine unmittelbare Bedeutung. Die Partikel sind relativ groß. Dazwischen befinden sich Poren, die gemeinsam Durchgangskanäle bilden.

Auf der Stützschicht III befindet sich die genannte Funktionsschicht II aus Zeolith-Partikeln. Diese haben einen mittleren Partikel-Durchmesser, der beispielsweise im Bereich von 0,05 - 1 µm liegt und Porengrößen im Bereich von ca. 1 µm bis 0,01 µm aufweist.

Funktionsschicht II ist in Suspensionsform auf die Stützschicht III aufgebracht und auf diese aufgesintert. Die Funktionsschicht II kann auch durch eine hydrothermale Behandlung unter Verwendung von Präcursor-Material-Zusätzen auf die Stützschicht III befestigt werden.

Die Molekularsiebschicht I ist von fundamentaler Bedeutung für den Separationsprozeß. Sie besteht aus Zeolith-Material, das beispielweise aus der oben stehenden Tabelle ausgewählt sein kann. Dieses Zeolith-Material wird in Form einer Lösung oder eines Gels auf die Funktionsschicht II aufgebracht, und bei Temperaturen von 80 bis 300° C bei dem zugehörenden Äquivalenzdruck oder einem höheren Druck behandelt. Als günstiger Temperaturwert hat sich 150° C erwiesen.

Molekularsiebschicht I stellt eine geschlossene kristalline Zeolith-Schicht dar. Durch die genannte Behandlung sind die Kristalle derart zusammengewachsen, daß keinerlei interkristalline Poren mehr vorliegen. Das zu behandelnde Medium kann somit nur durch die Kirstallstruktur selbst hindurchtreten.

Molekularsiebschicht I ist aufgrund der Herstellbedingungen sowohl porenfrei als auch extrem dünn. Weil sie dünn ist, ist der erzielbare Durchsatz relativ hoch.

## Patentansprüche

1. Verfahren zum Herstellen eines Membranfilterkörpers mit den folgenden Verfahrensschritten:
1.1 es wird mindestens eine poröse Funktionsschicht (II) aus Zeolith-Partikeln bereitgestellt;
1.2 auf die Funktionsschicht (II) wird eine Flüssigkeit aufgebracht, die zur Zeolith-Bildung geeignete Precursoren enthält;
1.3 die Funktionsschicht (II) und die darauf befindliche Flüssigkeit werden zur Bildung einer geschlossenen Molekutarsiebschicht (I) einem Druck und einer Temperatur ausgesetzt.
1,4 Molekularsiebschicht I und Funktionsschicht II bestehen aus dem gleichen Zeolithtyp.
1,5. die Flüssigkeit ist ein Gel oder eine Suspension oder eine Dispersion oder eine Lösung
1.6 die Zeolith-Partikel der Funktionsschicht (II) werden aneinander gebunden, so dass eine verfestigte Funktionsschicht (II) entsteht.

2. Verfahren nach Ansprüch 1, **dadurch gekennzeichnet, dass** die poröse Funktionsschicht II durch Sintern hergestellt wird.

3. Verfahren nach Anspruch 2, **dadurch gekennzeichnet, dass** beim Sintern ein Zeolith-Precursor als Sinter-Hilfsmittel eingesetzt wird.

4. Verfahren nach Anspruch 1, **dadurch gekennzeichnet, daß** zur Verfestigung der Funktionsschicht II den Zeolith-Partikeln Zeolith-Precursorren in flüssiger Form zugesetzt und diese hydrothermal in Zeolith umgewandelt werden.

5. Verfahren nach einem der Ansprüche 1 bis 4, **dadurch gekennzeichnet, dass** die Flüssigkeit einer Temperatur von 80 bis 300 Grad Celsius ausgesetzt wird

6. Verfahren nach einem der Ansprüche 1 bis 5, **dadurch gekennzeichnet, dass** die Flüssigkeit einer Temperatur von 120 bis 160 Grad Celsius ausgesetzt wird.

7. Verfahren nach einem der Ansprüche 1 bis 6, **dadurch gekennzeichnet, dass** die angewandten Drücke wenigstens gleich dem Äquivalenzdruck der Flüssigkeit bei der betreffenden Temperatur sind.

8. Verfahren nach einem der Ansprüche 1 bis 7, **dadurch gekennzeichnet, dass** die Funktionsschicht (II) auf wenigstens eine poröse Stützschicht (III) aufgebracht wird.

9. Verfahren nach einem der Ansprüche 1 bis 8, **dadurch gekennzeichnet, dass** die Funktionsschicht (II) von wenigstens einer porösen Stützschicht (III) aus einem anderen Material als Zeolith getragen ist.

10. Membranfilterkörper, umfassend eine geschlossene Molekufarsiebschicht (I), die aus einer Zeolith-Precursoren enthaltenden Flüssigkeit hervorgegangen ist, und eine diese tragende, poröse Funktionsschicht (II) aus Zeolith-Partikeln, hergestellt mit eim Verfahren gemäβ einem der Ansprüche 1 - 9.

## Claims

1. A method for producing a membrane filter body with the following method steps:
1.1 at least one porous functional layer (II) made of zeolite particles is provided;
1.2 a liquid is applied onto the functional layer (II) which contains precursors suitable for the formation of zeolite;
1.3 the functional layer (II) and the liquid situated thereon are subjected to a pressure and a temperature for the formation of a closed molecular sieve layer (I);
1.4 the molecular sieve layer and functional layer (II) consist of the same type of zeolite;
1.5 the liquid is a gel or a suspension or a dispersion or a solution;
1.6 the zeolite particles of the functional layer (II) are bound to each other so that a solidified functional layer (II) is obtained.

2. A method as claimed in claim 1, **characterized in that** the porous functional layer (II) is produced by sintering.

3. A method as claimed in claim 2, **characterized in that** a zeolite precursor is used during sintering as a sintering auxiliary means.

4. A method as claimed in claim 1, **characterized in that** for the purpose of solidifying the functional layer (II) zeolite precursors are added in liquid form to the zeolite particles and the same are converted in a hydrothermal way into zeolite.

5. A method as claimed in one of the claims 1 to 4, **characterized in that** the liquid is subjected to a temperature of 80 to 300 degrees Celcius.

6. A method as claimed in one of the claims 1 to 5, **characterized in that** the liquid is subjected to a temperature of 120 to 160 degrees Celsius.

7. A method as claimed in one of the claims 1 to 6, **characterized in that** the applied pressures are at least equal to the equivalent pressure of the of the liquid at the respective temperature.

8. A method as claimed in one of the claims 1 to 7, **characterized in that** the functional layer (II) is applied to at least one porous supporting layer (III).

9. A method as claimed in one of the claims 1 to 8, **characterized in that** the functional layer (II) is carried by at least one porous supporting layer (III) of a material other than zeolite.

10. A membrane filter body, comprising a closed molecular sieve layer (I) which arose from a liquid containing zeolite precursors and a porous functional layer (II) which carries the same and is made of zeolite particles, produced by a method according to one of the claims 1 to 9.

## Revendications

1. Procédé pour la fabrication d'un corps des filtre à membrane comprenant les étapes de procédé suivantes :
1.1 au moins une couche fonctionnelle (II) en particules de zéolithe est préparée ;
1.2 un liquide contenant des précurseurs convenant pour la formation de zéolithe est appliqué sur la couche fonctionnelle (II) ;
1.3 la couche fonctionnelle (II) et le liquide appliqué dessus sont exposés à une pression et à une température pour former une couche de filtration moléculaire (I) fermée ;
1.4 la couche de filtration moléculaire (I) et la couche fonctionnelle (II) se composent du même type de zéolithe ;
1.5 le liquide est un gel ou une suspension ou une dispersion ou une solution ;
1.6 les particules de zéolithe de la couche fonctionnelle (II) sont liées entre elles de façon à créer une couche fonctionnelle (II) solidifiée.

2. Procédé selon la revendication 1, **caractérisé en ce que** la couche fonctionnelle poreuse (II) est fabriquée par frittage.

3. Procédé selon la revendication 2, **caractérisé en ce qu'**on utilise lors du frittage un précurseur de zéolithe comme adjuvant de frittage.

4. Procédé selon la revendication 1, **caractérisé en ce que** pour solidifier la couche fonctionnelle (II), des précurseurs de zéolithe sont ajoutés sous forme liquide aux particules de zéolithe et transformés en zéolithe par voie hydrothermique.

5. Procédé selon l'une quelconque des revendications 1 à 4, **caractérisé en ce que** le liquide est exposé à une température de 80 à 300°C.

6. Procédé selon l'une quelconque des revendications 1 à 5, **caractérisé en ce que** le liquide est exposé à une température de 120 à 160°C.

7. Procédé selon l'une quelconque des revendications 1 à 6, **caractérisé en ce que** les pressions utilisées sont au moins égales à la pression équivalente du liquide à la température concernée.

8. Procédé selon l'une quelconque des revendications 1 à 7, **caractérisé en ce que** la couche fonctionnelle (II) est appliquée sur au moins une couche de support poreuse (III).

9. Procédé selon l'une quelconque des revendications 1 à 8, **caractérisé en ce** la couche fonctionnelle (II) est portée par au moins une couche de support poreuse (III) faite d'un autre matériau que la zéolithe.

10. Corps de filtre à membrane comprenant une couche de filtration moléculaire (I) fermée obtenue à partir d'un liquide contenant des précurseurs de zéolithe, et une couche fonctionnelle poreuse (II) en particules de zéolithe, produite par un procédé selon les revendications 1 à 9.
